# EUROPÄISCHE PATENTANMELDUNG

(11) **EP 2 952 079 A1**
(43) Veröffentlichungstag der Anmeldung: **09.12.2015**
(21) Anmeldenummer: 15401047.4
(22) Anmeldetag: 29.05.2015
(51) Int. Cl.: A01B 61/04

(54) **DREHPFLUG**

(30) Priorität: 02.06.2014 DE 102014107687
(71) Anmelder: Amazonen-Werke H. Dreyer GmbH & Co. KG, 49205 Hasbergen (DE)
(72) Erfinder: Resch, Rainer, 49170 Hagen a TW (DE); Laumann, Bernhard, 48477 Hörstel - Riesenbeck (DE)

(57) **Zusammenfassung**

Die Erfindung bezieht sich auf einen Drehpflug mit einem an einem Anbaubock (2) zur Verbindung des Drehpfluges (1) mit einem landwirtschaftlichen Zugfahrzeug (3) dreh- und/oder schwenkbar befestigbaren Pflugrahmen (6) und mit auf gegenüberliegenden Seiten des Pflugrahmens angeordneten Pfugscharreihen (7, 8) mit Pflugkörpern (9), wobei durch eine über eine Antriebsvorrichtung eingeleitete Drehbewegung des Pflugrahmen (6) wahlweise die eine oder die andere Pflugscharrreihe (7, 8) in ihre Betriebsstellung oder in ihre Außerbetriebstellung überführbar ist und wobei jeder Pflugkörper (9) gegen die Kraft eines Kraftspeichers (11), insbesondere eines Hydraulikzylinders, als Überlastsicherungselement schwenkbar an dem Pflugrahmen (6) abgestützt ist. Um die Überlastsicherung einstellbar ausgestalten zu können, ist vorgesehen, dass der Kraftspeicher (11) an einem Auslösehebel (12) angreift, der mit einer Schwenkachse (L1) schwenkbeweglich gegenüber dem Pflugrahmen (6) abgestützt ist und mit einer Kontaktstelle (L2) mit dem Kraftheber (11) verbunden ist, wobei zwischen der Schwenkachse (L1) und der Kontaktstelle (L2) ein Zuganker (13) an dem Auslösehebel (12) an einer Verbindungsstelle (L3) angreift und wobei die die Verbindungsstelle (L3) schneidende Mittelachse (M) des Zugankers (13) einen orthogonalen Abstand (I1) zu der Schwenkachse (L1) des Auslösehebels (12) hat, der kleiner ist als der orthogonale Lageabstand (I2) zwischen der die Verbindungsstelle (L3) schneidenden Mittelachse (M) des Zugankers (13) zu der Kontaktstelle (L2) des Kraftspeichers (11) mit dem Auslösehebel (12) und wobei die Abstände (I1) und (I2) durch ein Einstellelement (14) veränderbar sind.

## Beschreibung

Die Erfindung bezieht sich auf einen Drehpflug mit einem an einem Anbaubock zur Verbindung des Drehpfluges mit einem landwirtschaftlichen Zugfahrzeug dreh-und oder schwenkbar befestigbaren Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebstellung überführbar ist und wobei jeder Pflugkörper gegen die Kraft eines Hydraulikzylinders als Überlastsicherungselement schwenkbar an dem Pflugrahmen abgestützt ist.

Drehpflüge mit an gegenüberliegenden Seiten eines Pflugrahmens angeordneten Pflugscharreihen haben Pflugscharreihen, die auf der einen Seite rechts wendende und auf der anderen Seite links wendende Pflugkörper aufweisen, die jeweils wechselseitig bei einer Hinfahrt und bei einer Rückfahrt zum Einsatz kommen. Durch eine Antriebsvorrichtung, beispielsweise in Gestalt eines Drehzylinders ist der Pflug in die jeweilige Arbeitsstellung zu überführen. Für eine Arbeitsbreiteneinstellung kann dar-über hinaus der Drehpflug mit einer besonderen Vorrichtung ausgerüstet sein, um in der jeweiligen Arbeitsstellung die Pflugarbeitsbreite anpassen zu können.

Ein Drehpflug mit einer Überlastsicherung der eingangs genannten Art ist aus der DE 4218750 A1 bekannt. Dieser Drehpflug weist mehrere in der Arbeitsfahrtrichtung hintereinander angeordnete Pflugkörper auf, die jeweils an einem Halterahmen befestigt sind, die jeweils schwenkbar an einem Grindel, der seinerseits am Pflugrahmen abgestützt ist, verschwenkbar sind. An dem Halterahmen greift die Kolbenstange eines Hydraulikzylinders an, so dass der Pflugkörper gegen die Kraft des Hydraulikzylinders als Überlastsicherungselement gegenüber dem Pflugrahmen verschwenkt werden kann, zum Beispiel beim Auftreffen auf einen Stein. Die jeweiligen Hydraulikzylinder der einzelnen Pflugkörper sind von einem zentralen Druckspeicher mit einem Hydraulikmedium zu versehen, so dass an der wirksamen, mit dem Hydraulikmedium beaufschlagbaren Kolbenfläche des jeweiligen Hydraulikzylinders der einzelnen Pflugkörper ein identischer Druck vorliegt. Die einzelnen Pflugkörper treffen jedoch bei ihrem Arbeitseinsatz auf unterschiedliche Bodenverhältnisse, so dass es während des Arbeitseinsatzes dazu kommen kann, dass einzelne Pflugkörper gegen die Kraft des Ihnen zugeordneten Hydraulikzylinders aufgrund des dort vorherrschenden Druckes und aufgrund der individuell vorherrschenden Bodenverhältnisse ausweichen, andere jedoch nicht, obgleich ein Hindernis bei dem verschwenkten Pflugkörper nicht vorgelegen hat. Dies kann zu unbefriedigenden Pflugergebnissen führen.

Bei diesem vorbekannten Drehpflug ist es darüber hinaus außerordentlich schwierig, ein Auslöseverhalten der Überlastsicherung über den jeweiligen Kraftspeicher individuell einzustellen.

Es ist daher Aufgabe der vorliegenden Erfindung, einen Drehpflug der eingangs genannten Art derart weiterzubilden, dass das Auslöseverhalten des jeweiligen Kraftspeichers der Überlastsicherung individuell einzustellen ist.

Zur Lösung dieser Aufgabe zeichnet sich der Drehpflug der eingangs genannten Art dadurch aus, dass der Kraftspeicher an einem Auslösehebel angreift, der mit einer Schwenkachse schwenkbeweglich gegenüber dem Pflugrahmen abgestützt ist und mit einer Kontaktstelle mit dem Kraftheber verbunden ist, wobei zwischen der Schwenkachse und der Kontaktstelle ein Zuganker an dem Auslösehebel an einer Verbindungsstelle angreift und wobei die die Verbindungsstelle schneidende Mittelachse des Zugankers einen orthogonalen Abstand zu der Schwenkachse des Auslösehebels hat, der kleiner ist als der orthogonale Lageabstand zwischen der die Verbindungsstelle schneidenden Mittelachse des Zugankers zu der Kontaktstelle des Kraftspeichers mit dem Auslösehebel und wobei die Abstände durch ein Einstellelement veränderbar sind.

Damit ist ein Drehpflug zur Verfügung gestellt, bei dem über den Auslösehebel der Kraftspeicher eine jeweilige Überlastsicherung individuell und mit einfachen Mitteln von einer Bedienperson einzustellen ist. Dies erfolgt über die Einstellung der Längen- bzw. die Abstandverhältnisse mit dem Einstellelement des Zugankers, der im Betrieb gegen den Kraftspeicher drückt und damit hinsichtlich seiner Kraftübertragung einzustellen ist. Dabei ist entscheidend, das Längenverhältnis I1 gegenüber I2 verändern zu können mit der Maßgabe, dass das Abstandsverhältnis I1 möglichst klein ist und I2 möglichst groß ist. Dieses Übersetzungsverhältnis wird über das Einstellelement exakt eingestellt.

Bevorzugterweise ist das Einstellelement ein solches, das mittels herkömmlicher Werkzeuge eingestellt werden kann, beispielsweise verdreht werden kann. Dabei ist dieses Einstellelement bevorzugterweise ein Bauteil mit einer exzentrisch angeordneten Öffnung bzw. Bohrung, so dass dieses ein exzentrisch ausgebildetes Einstellelement darstellt. Dieses kann eine von einem Werkzeug angreifende Bedienkontur haben, die beispielsweise von einem Maulschlüssel als Werkzeug verdreht werden kann.

Der Auslösehebel hat bevorzugterweise mit Lageabstand zueinander angeordnete Wandungen, die jeweilige Öffnungen haben, in die Einstellelemente eingesetzt werden können. Dabei ist die Kontur der Öffnungen der Außenkontur des Einstellelementes angepasst. Vorzugsweise hat das Einstellelement eine als sechsflächiges Polygon ausgebildete Außenkontur, die in eine entsprechend kongruent ausgebildete Aufnahmeöffnung in einer Wandung des Auslösehebels eingesetzt werden kann und zwar mit einer außermittigen Öffnung im Einstellelement, die beispielsweise von einem Bolzenteil durchsetzt werden kann. Damit ist das Übersetzungsverhältnis zwischen I1 und I2 in sehr exakter Weise einzustellen, wobei die sechsflächige Polygonaußenfläche in der jeweiligen Einstellungsstellung eine sichere Kraftübertragung gewährleistet. Andere Außenkonturgestaltungen sind selbstverständlich möglich.

Zur weiteren Erläuterung der Erfindung wird auf weitere Unteransprüche und die Zeichnung verwiesen. In der Zeichnung zeigen:

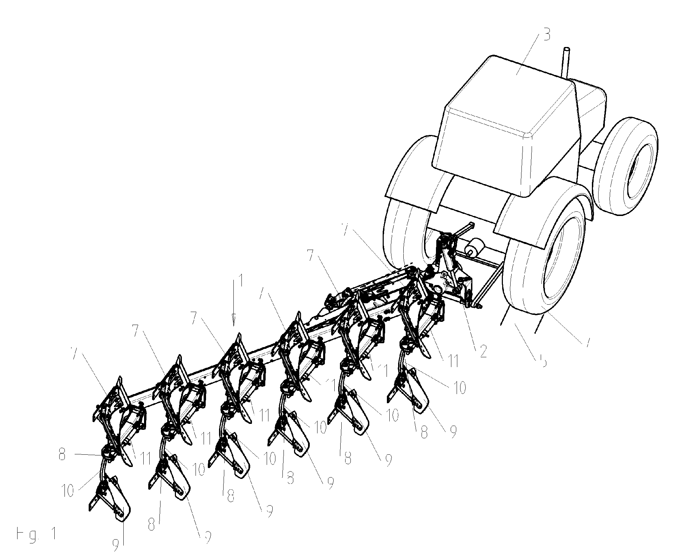

- Fig. 1:: in einer perspektivischen Ansicht schräg von oben ein Ausführungsbeispiel des Drehpfluges nach der Erfindung während einer Arbeitsfahrt;
- Fig. 2:: ausschnittsweise eine Seitenansicht auf den Pflugrahmen;
- Fig. 3:: ausschnittsweise eine Draufsicht auf ein Pflugkörper im Bereich seines Kraftspeichers;
- Fig. 4:: vergrößert eine Draufsicht auf den Auslösehebel nach Fig. 3;

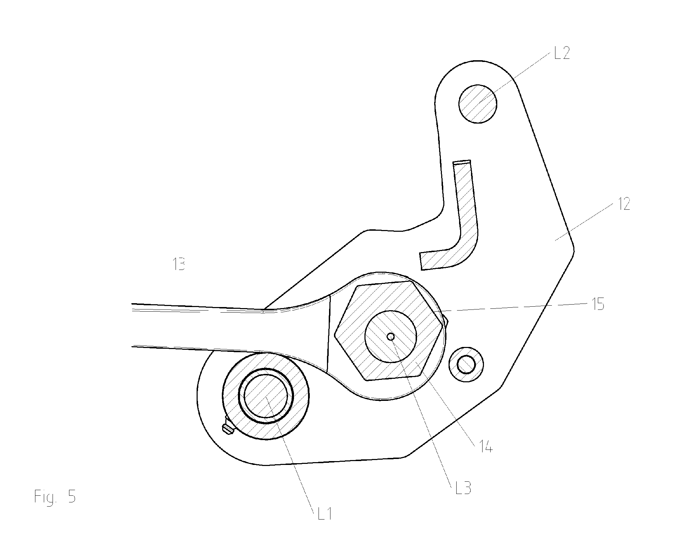

- Fig. 5:: vergrößert eine Draufsicht auf den Auslösehebel mit Einstellelement und Zuganker, und
- Fig. 6:: eine Zusammenbaudarstellung der Teile des Auslösehebels mit Zuganker.

In der Zeichnung sind übereinstimmende Teile mit übereinstimmenden Bezugsziffern versehen.

In Figur ist ein allgemein mit 1 bezifferter Drehpflug während der Arbeitsfahrt gezeigt, der über einen Anbaubock 2 an einen Schlepper 3 angehängt ist und von diesem während der Arbeitsfahrt gezogen wird. Der Schlepper 3 hat Schlepperräder 4, die Schlepperspuren 5 erzeugen. Der Pflugrahmen 6 trägt Pflugscharrreihen 7 und 8 mit in jeder Pflugscharrreihe7 bzw. 8 vorgesehenen Pflugkörpern 9, die über Haltearme 10 gegen die Kraft von Hydraulikzylindern 11 am Pflugrahmen 6 abgestützt sind.

Im einzelnen nicht derart dargestellt sind die Pflugkörper 6 gegen die Kraft der Hydraulikzylinder 11 am Pflugrahmen 6 abgestützt über entsprechende Halteteile, Grindel und dergleichen und sind um eine zum Beispiel quer zur Arbeitsfahrtrichtung gelegene Achse schwenkbar, wenn die entsprechende Haltekraft zum Beispiel bei einem Auftreffen des Pflugkörpers 9 auf ein Hindernis, zum Beispiel auf einen Stein, überwunden wird. Die Ausweichbewegung kann nach oben, kann seitwärts zur Arbeitsfahrtrichtung, kann aber auch in eine Richtung im dreidimensionalen Raum erfolgen.

Die Hydraulikzylinder 11 können von einem zentralen Speicher mit dem Hydraulikmedium versorgt werden, so dass bei allen Hydraulikzylindern 11 übereinstimmende Druckverhältnisse vorliegen.

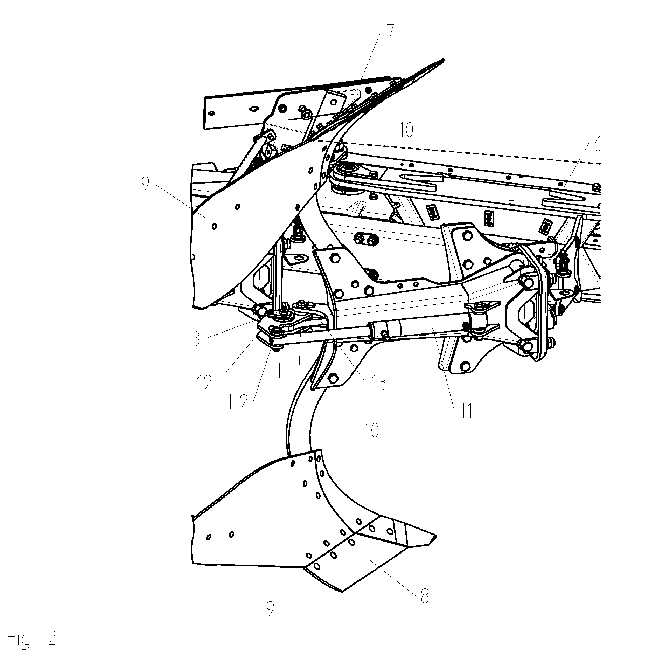

Wie näher aus der Figur 2 hervorgeht, greift der Speicher 11 an einem Auslösehebel 12 an. Der Auslösehebel 12 ist mit einer Schwenkachse L1 schwenkbewglich gegenüber dem Pflugrahmen 6 abgestützt und mit einer Kontaktstelle L2 mit dem Kraftheber 11 verbunden. Diese Kontaktstelle L2 zwischen dem Kraftheber 11 und dem Auslösehebel 12 ist ebenfalls als Gelenk ausgebildet. Zwischen der Schwenkachse L1 und der Kontaktstelle L2 ist ein Zuganker 13 mit dem Auslösehebel 12 über eine Verbindungsstelle L3 verbunden, die ebenfalls als Gelenk ausgebildet ist.

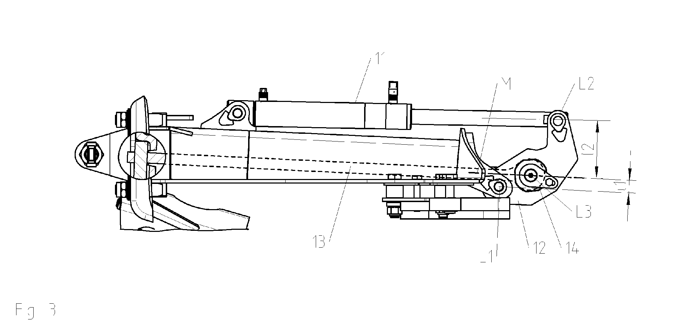

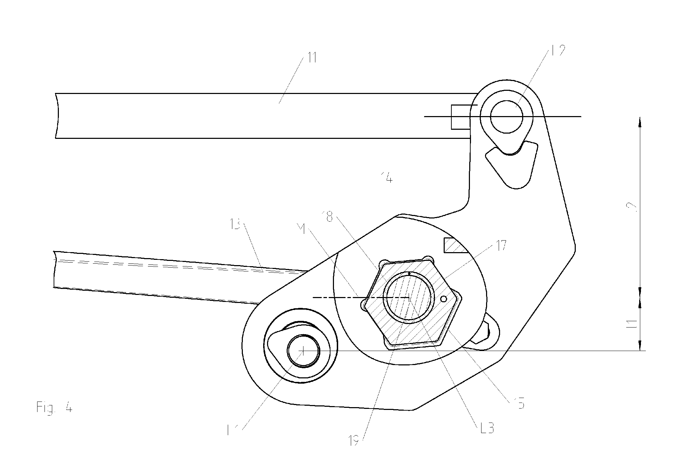

Wie näher aus den Figuren 3 und 4 hervorgeht, hat der Zuganker 13 eine Mittelachse M, die die Verbindungsstelle L3 schneidet. Der orthogonale Abstand, wie er in den Figuren 4 eingezeichnet ist zwischen dieser Mittelachse M bzw. zwischen der Kontaktstelle L3 und der Verlängerung der Schwenkachse L1 des Auslösehebel 12, bestimmt ein Abstandmaß I1, das immer kleiner sein soll als das Abstandsmaß I2 zwischen der Verbindungsstelle L3 und der Kontaktstelle L2 zwischen dem Kraftspeicher 11 und dem Auslösehebel 12 und zwar jeweils wiederum gesehen als orthogonales Abstandsmaß zwischen den Verlängerungen der jeweiligen Verbindungslinien, wie sie in den Figuren 3 und 4 eingezeichnet sind.

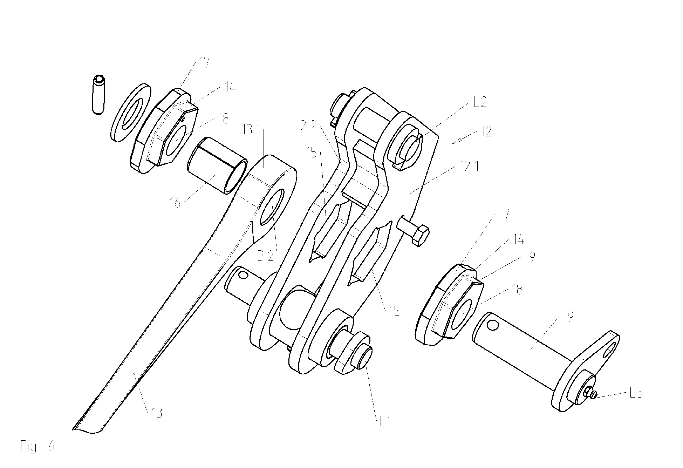

Zur Einstellung dieses Verhältnisses zwischen I1 und I2 ist ein Einstellelement 14 vorgesehen, das in eine entsprechende Öffnung 15 des Auslösehebels 12 einzusetzen ist. Wie näher aus der Figur 6 hervorgeht, hat der Auslösehebel 12 zwei mit Abstand zueinander angeordnete Wandungen 12.1 und 12.2, in denen jeweilige Aufnahmeöffnungen 15 angeordnet sind, in die die Einstellelemente 14 einzusetzen sind, und zwar unter Zwischenlage eines Auges 13.1 des Zugankers mit einer entsprechenden zentralen Öffnung 13.2 des Zugankers, das von einer Hülse 16 durchsetzt werden.

Die jeweiligen Einstellelemente 14 haben eine sechsflächige Polygonaußenfläche 17 mit außermittig und damit exzentrisch angeordneter Öffnung 18. An diese sechsflächige Polygonaußenkontur 17 schließt sich eine Werkzeugangriffsfläche 19 an, die beispielsweise von einem Maulschlüssel ergriffen werden kann. Die Öffnung 18 und die Hülse 16 durchsetzt einen Bolzen 19 im montierten Zustand, wobei im montierten Zustand sich eine Ansicht ergibt, wie sie in Figur 4 gezeigt ist (dort teilweise geschnitten).

## Patentansprüche

1. Drehpflug mit einem an einem Anbaubock (2) zur Verbindung des Drehpfluges (1) mit einem landwirtschaftlichen Zugfahrzeug (3) dreh- und/oder schwenkbar befestigbaren Pflugrahmen (6) und mit auf gegenüberliegenden Seiten des Pflugrahmens angeordneten Pfugscharrreihen (7, 8) mit Pflugkörpern (9), wobei durch eine über eine Antriebsvorrichtung eingeleitete Drehbewegung des Pflugrahmen (6) wahlweise die eine oder die andere Pflugscharrreihe (7, 8) in ihre Betriebsstellung oder in ihre Außerbetriebstellung überführbar ist und wobei jeder Pflugkörper (9) gegen die Kraft eines Kraftspeichers (11), insbesondere eines Hydraulikzylinders, als Überlastsicherungselement schwenkbar an dem Pflugrahmen (6) abgestützt ist, **dadurch gekennzeichnet, dass** der Kraftspeicher (11) an einem Auslösehebel (12) angreift, der mit einer Schwenkachse (L1) schwenkbeweglich gegenüber dem Pflugrahmen (6) abgestützt ist und mit einer Kontaktstelle (L2) mit dem Kraftheber (11) verbunden ist, wobei zwischen der Schwenkachse (L1) und der Kontaktstelle (L2) ein Zuganker (13) an dem Auslösehebel (12) an einer Verbindungsstelle (L3) angreift und wobei die die Verbindungsstelle (L3) schneidende Mittelachse (M) des Zugankers (13) einen orthogonalen Abstand (11) zu der Schwenkachse (L1) des Auslösehebels (12) hat, der kleiner ist als der orthogonale Lageabstand (I2) zwischen der die Verbindungsstelle (L3) schneidenden Mittelachse (M) des Zugankers (13) zu der Kontaktstelle (L2) des Kraftspeichers (11) mit dem Auslösehebel (12) und wobei die Abstände (11) und (I2) durch ein Einstellelement (14) veränderbar sind.

2. Drehpflug nach Anspruch 1, **dadurch gekennzeichnet, dass** das Einstellelement ein exzentrisch ausgebildetes Einstellelement ist, an dem der Zuganker angreift.

3. Drehpflug nach Anspruch 2, **dadurch gekennzeichnet, dass** der Auslösehebel doppelwandig ausgebildet ist und in mit Lageabstand zueinander angeordnete Wandungen aufweist mit Aufnahmeöffnungen für zwei exzentrisch ausgebildete Einstellelemente.

4. Drehpflug nach Anspruch 3, **dadurch gekennzeichnet, dass** der Zuganker zwischen den exzentrisch ausgebildeten Einstellelementen und den Wandungen des Auslösehebels angeordnet ist.

5. Drehpflug nach Anspruch 3 oder 4, **dadurch gekennzeichnet, dass** der Zuganker an seinem dem Auslösehebel zugewandten Ende ein angeformtes Auge mit einer zentralen Aufnahme aufweist, die von einem in in den Einstellelementen vorgesehene Öffnungen einführbaren Bolzenglied durchsetzbar ist.

6. Drehpflug nach einem der Ansprüche 1 bis 5, **dadurch gekennzeichnet, dass** ein Einstellelement eine exzentrisch vorgesehene Öffnung (18) aufweist.

7. Drehpflug nach einem der Ansprüche 1 bis 6, **dadurch gekennzeichnet, dass** der Auslösehebel eine kongruente zu der Außenkontur (17) eines Einstellelementes (14) ausgebildete Aufnahmeöffnung (15) aufweist.

8. Drehpflug nach einem der Ansprüche 1 bis 7, **dadurch gekennzeichnet, dass** ein Einstellelement (14) eine als mehrflächiges Polygon ausgebildete Außenkontur (17) mit einer außermittigen Aufnahmeöffnung (18) aufweist.

9. Drehpflug nach Anspruch 8, **dadurch gekennzeichnet, dass** ein Einstellelement (14) eine als sechsflächiges Polygon ausgebildete Außenkontur (17) mit einer außermittigen Aufnahmeöffnung (18) aufweist.
